# EUROPEAN PATENT APPLICATION

(11) **EP 1 469 337 A1**
(43) Date of publication of application: **20.10.2004**
(21) Application number: 04007545.9
(22) Date of filing: 29.03.2004
(51) Int. Cl.: G02C 5/12

(54) **Connection and articulation device for bridge pads for eyeglasses**

(30) Priority: 18.04.2003 IT PD20030078
(71) Applicant: SILCON PLASTIC S.r.l., 32012 Forno di Zoldo (Belluno) (IT)
(72) Inventor: Battistin, Pietro, 32012 Forno Di Zoldo (Prov. of Belluno) (IT); Costantin, Arcangelo, 32012 Forno Di Zoldo (Prov. of Belluno) (IT)
(74) Representative: Modiano, Guido, Dr.-Ing.

(57) **Abstract**

A connection and articulation device for bridge pads for eyeglasses, comprising a hook (11) provided with a first end (12) that is fixed to a frame (13) and a tab (15) that is rigidly coupled to a bridge pad (14) and is provided with a through hole (16) that is contoured so as to accommodate a pivot (17) provided on the second end (18) of the hook (11); a through hole (16) is formed by two cavities (19) that taper from the outside inward, are coaxial and opposite and join so as to form, in the hole (16), a narrower region (20) whose dimensions substantially coincide with the maximum dimension of the transverse cross-section of the pivot (17); the pad (14) oscillates, with respect to the pivot (17) and at the narrower region (20), between extreme positions defined by the surfaces (21) of the cavities (19); the device (10) is also provided with elements (23) for limiting the rotation of the pad (14) about the longitudinal axis of symmetry (24) of the pivot (17).

## Description

The present invention relates to a connection and articulation device for bridge pads for eyeglasses.

Currently, many ranges of eyeglasses and particularly eyeglasses with a metal frame have pads for resting the eyeglasses on the nose which are not monolithic with the frame.

Such pads are thus associated with the respective frames by means of suitable connection and articulation devices.

The main known type of these devices has a hook that is provided, at a first end, with a tab that is provided with a hole arranged transversely to the direction in which said hook is orientated.

Such tab has a cavity inside which coupling means for an insert are arranged; the insert is in turn embedded in a pad for resting on the nose.

The coupling means are generally constituted by a screw for mutually connecting the tab and the insert, the screw being suitable to screw into a protruding portion of the insert that is provided with a corresponding complementary thread.

Such type of device is particularly appreciated because of its ability to blend in with the frame, both when said frame is of the three-part type and when it is of the one-piece type, without altering its design and therefore without reducing, but indeed enhancing, its aesthetic content.

Moreover, this type of device is widely adopted because of the wide range of positions that said pad can assume by virtue of said articulation.

The ergonomic quality of the resting of the eyeglasses on the nose by means of said pads is often a decisive factor in the choice of an eyewear product over another.

The incorrect posture of the eyeglasses with respect to the nasal septum can in fact lead to unpleasant feelings of compressions at the septum and facilitate, in a particularly sensitive user, the onset of headaches and the like.

In the worst case, the incorrect posture of the eyeglasses can even invalidate the sight-correction effect provided by the graduation of the lenses.

Although currently known connection and articulation devices for pads are widely appreciated commercially, they are not free from drawbacks.

A first drawback is the large number of components of such known devices.

Between the tab on the hook and the pad there is in fact also a screw which, as mentioned, couples the insert to the tab, which insert is embedded in the pad.

The overmolding of the pad on the insert and the subsequent association of the insert and the pad with the tab by screwing the screw are operations that further increase the cost of the finished product, adding to the cost factors entailed by the insert and the connecting screw.

Moreover, the assembly constituted by said hook and said tab is provided either by soldering the tab to the hook or by molding, using a relatively complicated mold which therefore is in turn expensive.

The aim of the present invention is to provide a connection and articulation device for bridge pads for eyeglasses that solves the problems noted in known types.

Within this aim, an object of the present invention is to provide a device that is cheap as regards its components and its fitting.

Another object of the present invention is to provide a device that can be fitted conveniently and rapidly without particular provisions on known types of frame that are currently already commercially available.

Another object of the present invention is to provide a connection and articulation device for bridge pads for eyeglasses that allows the associated pad to assume rapidly the best ergonomic configuration for the user and therefore allows the pad to be arranged in an optimum manner with respect to the bone and cartilage configuration of the nose of the user.

Another object of the present invention is to provide a connection and articulation device for bridge pads for eyeglasses that can be manufactured with known technologies and plants.

This aim and these and other objects that will become better apparent hereinafter are achieved by a connection and articulation device for bridge pads for eyeglasses, of the type that comprises a hook provided with a first end that is fixed to a frame and a tab that is rigidly coupled to a bridge pad and is provided with a through hole that is contoured so as to accommodate a pivot provided on the second end of said hook, said device being characterized in that said through hole is formed by two cavities that taper from the outside inward, are coaxial and opposite and join so as to form, in said hole, a narrower region whose dimensions substantially coincide with the maximum dimension of the transverse cross-section of said pivot, said pad being suitable to oscillate, with respect to said pivot and at said narrower region, between extreme positions defined by the surfaces of said cavities, said pivot having means for irreversible locking to said tab, said device being further provided with means for limiting the rotation of said pad about the longitudinal axis of symmetry of said pivot.

Further characteristics and advantages of the present invention will become better apparent from the following detailed description of a preferred but not exclusive embodiment thereof, illustrated by way of nonlimiting example in the accompanying drawings, wherein:

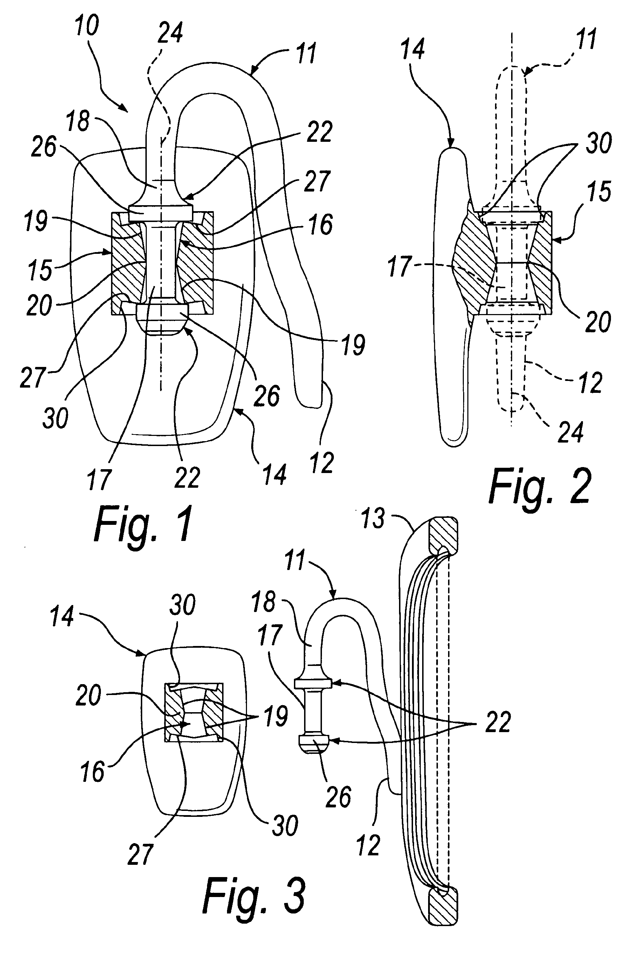

Figure 1 is a partially sectional front view of a device according to the invention;
Figure 2 is a partially sectional side view of a device according to the invention;
Figure 3 is an exploded front view, with said hook fixed to a frame;
Figure 4 is a partially sectional front view of the invention in a first oscillation end position;
Figure 5 is a partially sectional front view of the invention in a second oscillation end position;
Figure 6 is a top view of a device according to the invention;
Figure 7 is a top view of a device according to the invention in a first end position for rotation;
Figure 8 is a top view of a device according to the invention in a second end position for rotation.

With reference to the figures, a connection and articulation device for bridge pads for eyeglasses according to the invention is generally designated by the reference numeral 10.

The device 10 comprises a hook 11, which has a first end 12 that is fixed to a frame 13, and a tab 15, which is rigidly coupled to a bridge pad 14 and is provided with a through hole 16.

The hole 16 is contoured so as to accommodate a pivot 17 that is provided on a second end 18 of the hook 11.

The through hole 16 is formed by two cavities 19 that taper from the outside inward and are coaxial and mutually opposite.

The cavities 19 are joined so as to form a narrower region 20 in the hole 16.

The narrower region 20 conveniently has dimensions that substantially coincide with the maximum dimension of the transverse cross-section of the pivot 17.

The pad 14 is suitable to oscillate, with respect to the pivot 17 and at the narrower region 20, between end positions defined by the surfaces 21 of the cavities 19.

The pivot 17 has means 22 for irreversible locking to the tab 15.

The device 10, moreover, is provided with means 23 for limiting the rotation of the pad 14 about the longitudinal axis of symmetry 24 of the pivot 17.

Advantageously, the tapering cavities 19 are frustum-shaped and symmetrical with respect to the transverse central plane of the tab 15.

The irreversible locking means 22 are constituted by protrusions 25, which are arranged at the ends of the pivot 17 transversely to the longitudinal axis 24.

The protrusions 25 are constituted by two projections 26, which are opposite and symmetrical with respect to the longitudinal axis 24, for each of the two ends of the pivot 17.

The projections 26 engage with an irreversible interlocking in an axial direction on corresponding shoulders 27.

The profile of the longitudinal cross-section of the shoulders 27 is substantially perpendicular to the corresponding profile of the longitudinal cross-section of the contiguous cavity 19.

This allows the pivot 17 to oscillate freely between said positions without the projections 26 interfering with the corresponding shoulders 27.

The means 23 for limiting rotation are constituted, on the tab 15, by side walls 30 that delimit the surface of each one of the shoulders 27.

The side walls 30 form stroke limiting abutments 31 for the protrusions 25.

Advantageously, therefore, the projections 26 form the part related to the pivot 17 of the irreversible locking means 22 and of the rotation limiting means 23.

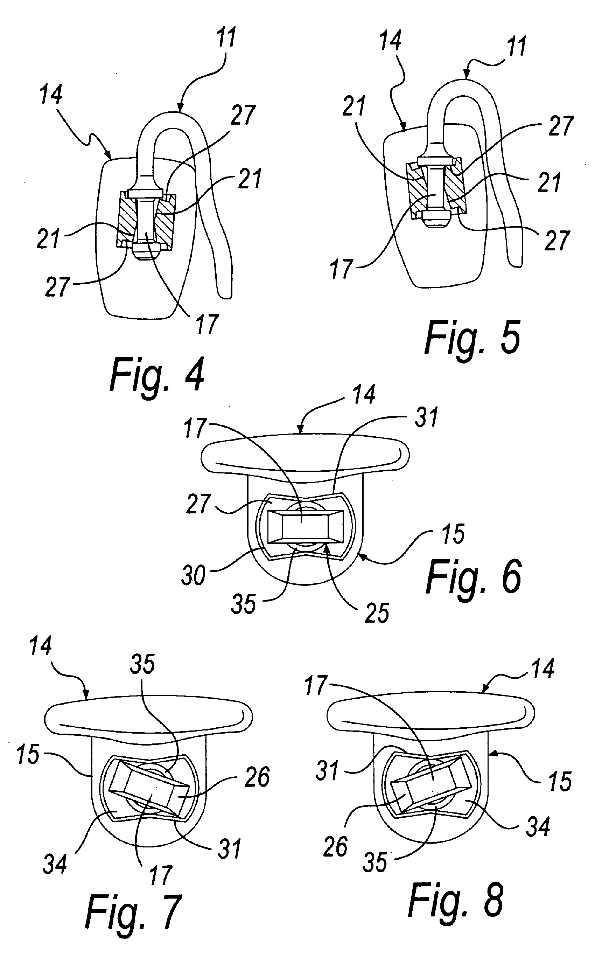

As shown in fact in Figures 7 and 8, the limitation of the rotation of the pad 14 with respect to the pivot 17 is provided by the abutment of the projections 26 against the abutments 31.

The side walls 30 each form, on the lower face 32 and on the upper face 33 of the tab 15, substantially two annular sectors 34 that are symmetrical with respect to the opening onto the outside 35 of each one of the cavities 19.

Advantageously, the tab 15 is monolithic with the pad 14.

The pad 14 is obtained by molding.

In the embodiment described herein, the pivot 17 has a substantially square transverse cross-section.

The diagonal of said square cross-section coincides substantially with the diameter of the narrower region 20.

In practice it has been found that the invention thus described solves the problems noted in known types of connection and articulation device for bridge pads for eyeglasses.

In particular, the present invention provides a device that has a low cost and is very easy and straightforward to assemble.

Moreover, the present invention provides a device that can be fitted immediately on known types of frame.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2003A000078 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A connection and articulation device for bridge pads for eyeglasses, of the type that comprises a hook (11) provided with a first end (12) that is fixed to a frame (13) and a tab (15) that is rigidly coupled to a bridge pad (14) and is provided with a through hole (16) that is contoured so as to accommodate a pivot (17) provided on the second end (18) of said hook (11), said device (10) being **characterized in that** said through hole (16) is formed by two cavities (19) that taper from the outside inward, are coaxial and opposite, and join so as to form, in said hole (16), a narrower region (20) whose dimensions substantially coincide with the maximum dimension of the transverse cross-section of said pivot (17), said pad (14) being suitable to oscillate, with respect to said pivot (17) and at said narrower region (20), between extreme positions defined by the surfaces (21) of said cavities (19), said pivot (17) having means (22) for irreversible locking to said tab (15), said device (10) being further provided with means (23) for limiting the rotation of said pad (14) about the longitudinal axis of symmetry (24) of said pivot (17).

2. The device according to claim 1, **characterized in that** said tapering cavities (19) are frustum-shaped and symmetrical with respect to the transverse central plane of said tab (15).

3. The device according to claim 1, **characterized in that** said irreversible locking means (22) are constituted by protrusions (25) that are arranged at the ends of said pivot (17) transversely to said longitudinal axis (24), said protrusions (25) being suitable to engage in an axial direction, by irreversible interlocking, on corresponding shoulders (27).

4. The device according to claim 3, **characterized in that** the profile of the longitudinal cross-section of said shoulders (27) is substantially perpendicular to the corresponding profile of the longitudinal cross-section of said contiguous cavity (19).

5. The device according to claim 1, **characterized in that** said means (23) for limiting rotation are constituted by side walls (30) that delimit the surface of each one of said shoulders (27) and form stroke limiting abutments (31) for said protrusions (25).

6. The device according to claim 5, **characterized in that** each one of said side walls (30) forms, on the lower face (32) and on the upper face (33) of said tab (15), substantially two annular sectors (34) that are symmetrical with respect to the outward opening (35) of each one of said cavities (19).

7. The device according to one or more of the preceding claims, **characterized in that** said tab (15) is monolithic with said pad (14).

8. The device according to one or more of the preceding claims, **characterized in that** said pivot (17) has a substantially square transverse cross-section.
